Europäisches Patentamt

European Patent Office

Office européen des brevets

(19)

(11) Publication number: 0 274 242

A1

# (12) EUROPEAN PATENT APPLICATION

(21) Application number: 87310912.8

(22) Date of filing: 11.12.87

(51) Int. Cl.⁴: G01D 5/50 , G01P 3/481

(30) Priority: 15.12.86 GB 8629914

(43) Date of publication of application:
13.07.88 Bulletin 88/28

(84) Designated Contracting States:
AT BE CH DE ES FR GB IT LI LU NL SE

(71) Applicant: AMERSHAM INTERNATIONAL plc
Amersham Place
Little Chalfont Buckinghamshire HP7
9NA(GB)

(72) Inventor: Lennox, David
2 Underwood Cottages Winchmore Hill
Amersham Bucks.(GB)
Inventor: Bunting, Walter
85 Amersham Road
Little Chalfont Bucks.(GB)

(74) Representative: Boydell, John Christopher et
al
Stevens, Hewlett & Perkins 5 Quality Court
Chancery Lane
London, WC2A 1HZ(GB)

(54) Movement or position sensor.

(57) A sensor for monitoring the movement of a rotating shaft (1). Mounted on the shaft (1) is a radiation source (5), the radiation from which passes to an associated radiation detector (3) in series of bursts, one per revolution of the shaft. Radiation enters the detector through a window (4) and acts to imbalance the detector, causing a pulse to appear in the potential of collector electrode (9) as the source (5) passes the window (4) on each revolution.

EP 0 274 242 A1

## "MOVEMENT OR POSITION SENSOR"

This invention relates to a movement or position sensor.

There is a common requirement in industry to be able to detect the movement or position of one member relative to another. Many types of sensor are known for this purpose but most if not all suffer from the disadvantage that their operation may be fairly readily interfered with by one means or another. Thus where any sort of security application is envisaged, a sensor which is largely immune from external interference is desirable. A typical such application is in the monitoring of service supply meters such as electricity and gas meters. In such meters, it is desired to monitor the movement, in this case rotation, of a member attached to the meter mechanism and which is able to record on a display the consumption of electricity, gas or whatever. Most alternatives to the existing, essentially mechnaical, methods of measuring and displaying the consumption are not immune from external interference, particularly from magnetic fields and, as such, are unacceptable for reliable measurement of consumption. What is needed is a tamper-proof way of generating an electric signal representative of the consumption, which signal can be passed to a display and/or to a memory for the purpose of storing the accumulated result which can then be read off by the service company at intervals. The meter reading can be obtained by attendance at the premises where the meter resides to directly read the reading off the display. Storing the accumulated consumption in memory opens up the possibility, however, of reading the meter remotely by radio.

The present invention was developed with this application in mind, but it is thought to have much wider application as being a cheap, reliable position and/or movement sensor particularly, but not exclusively useful in applications where unauthorised tampering might be a problem.

In the invention the sensor comprises a radioactive source mounted in such a way that its output radiation is controlled by a member whose movement or position is to be monitored, and radiation detector means operable to provide an output signal indicate of the output radiation from said source. In an embodiment of the invention, the member to be monitored is interposed between the source and the detector means, both fixedly mounted in relation to one another, to thus selectively screen radiation from the source. The member is provided with a radiation window (for example an aperture) so that, as the member moves relative to the source/detector means, short burst of radiation pass from the source to the detector means as the window passes the source. The output signal of the detector means is representative of these short bursts and thus of the movement of the member. Circutiry attached to the detector means can analyse the output signal to indicate the fact that movement has occurred or, where the window is caused to pass the source repetitively (such as may be achieved in rotation of the member) the instantaneous speed of movement or the number of times the window has passed the source over a given period.

In an alternative embodiment of the invention the source is attached to the member itself or to a further member connected to the first-mentioned member to move therewith. The arrangement is such that, as the member moves relative to the detector means, the radiation output from the source passes across the detector means, thus causing a short burst of radiation to pass into the detector means. This result in a detector output signal in the same manner as described above which can be used to detect movement, or speed, or whatever, as before.

In the most common realisation of the invention, the member being monitored will be a rotating member so that the sensor is essentially required to detect rotation of the member. If just a single source is attached to the member, or a fixed source in association with a single window, then the detector means will receive a series of burst of radiation as the member rotates: one burst for each rotation. If desired, more sources could be attached to the member, or more windows formed in the member in the fixed source version, to give a greater number of bursts of radiation per revolution. The sources/windows may be evenly spaced with respect to one another which will enable such information as the angular position of the member to be assessed, or may be irregularly spaced, but to a predetermined pattern, to act as a monitor to the correct functioning of the sensor - especially useful in security applications since any attempt to interfere with the working of the sensor will almost certainly result in an incorrect pattern of radiations bursts being received by the detector means, which incorrect pattern can be detected and activated a warning of some kind.

It may also be useful to attach to the member sourced having different activities; as these pass one by one across the detector means they will give rise to an output signal indicative of the activity of the source and will thus enable such information as the absolute position of the member to be detected. Alternatively different-activity sources can be mounted in predetermined patterns in the manner described above for security and similar applications or, using Gray code analysis, to detect the direction of movement.

A similar effect to using variable-strength sources mounted on the member would be to use a fixed source and windows on the member of different obscuration or absorption.

One particular radiation detector which would be particularly suitable in this application is a balanced detector comprising a pair of ionising chambers defined by respective outer and source electrodes and separated by a collector electrode which maintains a potential intermediate between that of the source and outer electrodes. The two chambers are sealed from the exterior, but a radiation transparent window in one of the chambers allows radiations in from the exterior and has the effect, as will be explained in more detail hereinafter, of unbalancing the detector and causing the potential of the collector electrode to move towards that of one or the other of the source or outer electrodes. Thus a burst of radioactivity passing through the window, such as is generated by the source of the invention, will result in a pulse-like change in the potential of the collector electrode. This pulse can be amplified and analysed by suitable circuitry and used to provide the required information about the movement of the associated member.

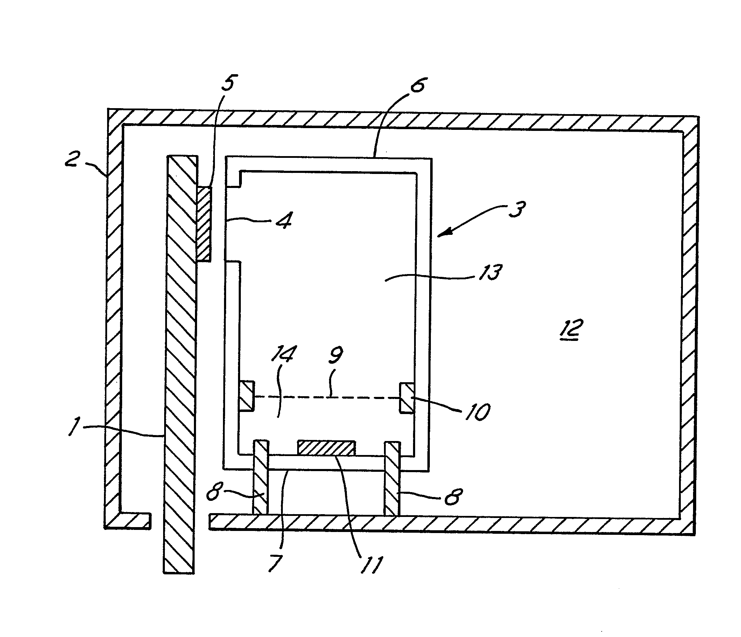

In order that the invention may be better understood, an embodiment thereof will now be described by way of example only and with reference to the accompanying drawing which is a diagrammatic side section through a rotation sensor according to the present invention.

The illustrated sensor is intended to monitor the rotation of a shaft 1 extending within an enclosure 2 forming an electrostatic shield. Means (not shown) are provided for rotaing the shaft 1 from the exterior of the enclosure. Mounted within the enclosure is a radiation detector 3 into which radiation may enter through a radiation-transparent window 4. A small radioactive source 5, for example 10 $\mu$C Ni 63, is attached to the shaft 1 so that it irradiates the window 4 once per revolution of the shaft.

The detector 3 comprises an outer electrode 6 and source electrode 7 insulated from one another by insulators 8 which also to mount the detector within the enclosure 2. The outer electrode 6 and source electrode 7 together form a sealed chamber which is split into a sensing chamber 13 and ionisation chamber 14 by a collector electrode 9 mounted on the outer electrode 6 by insulators 10. The electrodes are typically of stainless steel and the insulators are of plastics material such as ptfe having a bulk and surface resistance greater than $10^{12}\Omega$. The collector electrode may take the form of a grid, as shown, or may be plate with one or more holes formed therein. As has been said, the chamber is sealed from the exterior to prevent the ingress of contaminants which could upset the operation. The window 4 maintains this seal, and may be made from any suitable radiation transparent material such as thin aluminium, mylar or even thin stainless steel foil. For best penetration through the window, it is preferred that the source 5 be a $\beta$ emitter; Ni 63 is an example of such a source.

Mounted on the source electrode 7 is a small radioactive source 11 such as 0.9 $\mu$C Am 241. Radioactive emission from this source causes ionisation of the air within the sealed chamber on both sides of the collector electrode 9. A potential difference is applied between the outer electrode 6 and source electrode 11 and, under this electric field, the ions migrate to the appropriate electrodes, according to their polarity, and cause an ion current, typically of the order of $10^{12}$ A to pass. The collector electrode assumes a potential intermediate between that of the source electrode and outer electrode. For example with 9 volts across the outer electrode and the source electrode the collector electrode assumes a potential of approximately 5 volts with respect to the source electrode in the quiescent condition.

When radiation enter the sensing cjamber 13 through the window 4, the balance of the detector is upset and the potential of the collector electrode 9 with respect to the other two electrodes changes. This change is caused by the formation of extra ion pairs in the sensing chamber due to the increased radiation in the sensing chamber. Where the outer electrode is positive with respect to the source electrode, the negative ions of these extra ion pairs are attracted to the outer electrode and the positive ions to the collector electrode with the result that the collector electrode potential rises. A change of between 1 and 2 volts is typical but it is felt that optimisation of the design could produce larger voltage swings if required. The higher the activity of the source, the larger the number of extra ions pairs released in the sending chamber 13, and hence the greater the potential change of the collector electrode. Thus different-activity sources can be distinguished by analysis of the magnitude of the potential change.

The change of collector electrode voltage is passed to an FET preamplifier (not shown) housed in a space 12 provided within the enclosure 2, and thence externally to further electronic circuitry (also not shown) which analyses the signals in the manner required for the particular application. In most applications, where the source 5 moves across the window 4, the output from the collector electrode will take the form of a pulse train comprising one pulse for each revolution of the shaft 1. Thus the rotation of the shaft can be monitored with great reliability. The sensor is tamper proof and has a very low current drain making it suitable for the monitoring of rotation, and indeed any movement, in a wide field of application.

## Claims

1. A movement or position sensor for monitoring the movement and/or position of a member, said sensor comprising a radioactive source and radiation detector means so mounted with respect to one another and with respect to said member that the radiation passing from said source to the radiation detector means is indicative of the movement and/or position of the member.

2. A sensor as claimed in claim 1 wherein said member is interposed between the source and the detector means in such a way as to selectively screen radiation from the source, and wherein the member is provided with a radiation window through which radiation may pass from the source to the detector means as the window crosses the radiation path during movement of the member.

3. A sensor as claimed in claim 2 wherein a plurality of said windows are provided, spaced apart along the path of movement of the member, to give a series of pulses of radiation from the source to the detector means as the windows pass across the radiation path.

4. A sensor as claimed in claim 3 wherein said windows are spaced apart along the path of movement of the marker in a pattern which provides information for security purposes and/or to indicate the direction of movement.

5. A sensor as claimed in either one of claims 3 or 4 wherein said different windows have different obscuration or adsorption with respect to the radiation, to thereby provide different levels of activity to the detector means as the windows cross the radiation path, and means for differentiating said different activities to provide information for security purposes and/or indicate the direction of movement.

6. A sensor as claimed in claim 1 wherein the source is attached for movement with the member, the arrangement being such that, as the member moves, the radiation output from the source passes across the detector means to give a burst of radiation into the detector means indicative of the movement of the member.

7. A sensor as claimed in claim 6 wherein the source is attached directly to the member whose movement and/or position is to be monitored.

8. A sensor as claimed in either one of claims 6 or 7 wherein a plurality of sources are attached for movement with the member, the arrangement being such that, as the member moves, the sources pass one by one across the detector means.

9. A sensor as claimed in claim 8 wherein said sources are spaced apart in a pattern which provide information for security purposes and/or to indicate the direction of movement.

10. A sensor as claimed in either one of claims 8 or 9 wherein the different sources have different activities, and wherein means are provided for differentiating said different activities to provide information for security purposes and/or to indicate the direction of movement.

11. A sensor as claimed in any one of the preceding claims wherein the member whose movement and/or position is to monitored is mounted for rotation.

12. A sensor as claimed in any one of the preceding claims wherein said detector means comprises a pair of ionising chambers defined by respective outer and source electrodes and separated by a collector electrode, and means for maintaining said collector electrode at a potential intermediate between that of the source and outer electrodes, and wherein one of said ionising chambers is formed with a radiation transparent window forming the radiation sensitive area of said detector means, the arrangement being such that a burst of radioactivity from said source passing through the window will imbalance the potentials on the electrodes, resulting in a pulse-like change in the potential on the collector electrode.

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CA-A-1 042 561 (J.L. VANDETTE) * Page 3, line 31 - page 4, line 31; figures 1,2A-5B * | 1-4 | G 01 D 5/50 G 01 P 3/481 |
| X | JOURNAL OF SCIENTIFIC INSTRUMENTS (JOURNAL OF PHYSICS E), vol. 2, series 2, no. 2, February 1969, pages 198-200, London, GB; B.E. NOLTINGK et al.: "Remote measurement of displacement by use of a gamma-ray source" * Page 198, column 1, line 29 - page 198, column 2, line 15; figure 1 * | 1,2 | |
| X | DE-A-2 412 974 (JÜTTNER et al.) * Page 4, lines 4-13; figures * | 1,6-8, 11 | |
| A | | 9 | |
| X | US-A-4 236 074 (C.C. CHEN) * Column 2, lines 23-36; column 2, line 53 - column 3, line 7; figures 1,3,4 * | 1,7 | |
| A | | 6,8,9 | TECHNICAL FIELDS SEARCHED (Int. Cl.4) |
| A | DE-C-1 081 978 (PHILIPS) * Column 3, line 48 - column 4, line 9; column 5, lines 16-35; figure 2 * | 12 | G 01 P G 01 D G 01 T |

The present search report has been drawn up for all claims

| Place of search | Date of completion of the search | Examiner |
|---|---|---|
| THE HAGUE | 16-03-1988 | HANSEN P. |

EPO FORM 1503 03.82 (P0401)